# EUROPEAN PATENT SPECIFICATION

(11) **EP 2 560 805 B1**
(45) Date of publication and mention of the grant of the patent: **17.06.2015**
(21) Application number: 11731529.1
(22) Date of filing: 20.04.2011
(51) Int. Cl.: B29C 47/02, B31B 19/74, B31B 19/90, B31B 23/00, B65B 9/08, B29C 47/22, B29C 47/86, B29C 69/02, B29C 47/88

(54) **METHOD AND DEVICE FOR MANUFACTURING A CONTINUOUS WEB OF BAGLIKE PACKAGE BLANKS**
VERFAHREN UND VORRICHTUNG ZUR HERSTELLUNG EINER CONTINUERLICHEN FOLIENBAHN FÜR TÜTENHERSTELLING
PROCÉDÉ ET DISPOSITIF DE FABRICATION D'UNE BANDE CONTINUE D'ÉBAUCHES D'EMBALLAGE DU TYPE SAC

(30) Priority: 22.04.2010 SE 1050397
(43) Date of publication of application: 27.02.2013
(73) Proprietor: Pronova Aktiebolag, 302 41 Halmstad (SE)
(72) Inventor: JOSTLER, Jan, S-302 72 Halmstad (SE); JOSTLER, Johan, S-302 74 Halmstad (SE)
(74) Representative: Tholén, Johan
(86) International application number: PCT/SE2011/050487
(87) International publication number: WO 2011/133102

(56) References cited:
- EP-A1- 0 023 817
- EP-A1- 0 569 301
- WO-A1-2004/037665
- GB-A- 1 145 814
- US-A- 5 121 997
- US-A1- 2003 185 953
- US-A1- 2005 269 733
- US-A1- 2007 222 105

## Description

### Technical Field

The present invention relates to a method and a device for producing edge thickenings on a web for bag-like package blanks. These package blanks are formed to be transported along a web for the filling of the bag-like package blanks joined together one after the other. After filling, the package blanks are sealed and separated into individual sealed bags.

### Background of the Invention

The background of the invention is seen in the patent specification SE 501544 (US 5,687,549), which discloses a method and a device for forming and filling packages that are formed of package blanks manufactured by folding a flexible strip of plastic material into the package blank that consists of bag-like parts joined together one after the other. Said parts are furthermore arranged to be carried and transported along a web by support arms provided with channels and channel gaps in which the package blank slides. The bag-like parts slide along the support arms for opening, filling, sealing and separation into individual packages filled with contents. The package blank is formed with upper edge parts provided with thickenings, which are intended to slide in each one of the channels in the support arms, which are situated parallel in relation to each other. At a filling area, the support arms curve off from each other and form a greater spacing between them, the joined together bag-like parts being opened and filling can take place. After the bag-like parts having passed said filling area, the distance decreases between the support arms again, an after-treatment in the form of sealing, separation and detachment from the support arms commencing.

The patent specification SE 525741 (WO 2005/023693) discloses a method and a device for producing a continuous edge thickening along the running direction of a stretched and tensioned web of a positively and continuously transported thermoplastic film. The thickening according to this patent specification is provided by edge parts of the plastic film being folded and welded into a final state for the use of the plastic film as packages, e.g., in a packing machine according to prior art, e.g. WO 02/083506.

These disclosed methods and devices for providing edge thickenings on a package blank make great demands on the material and its thickness as well as the manufacturing equipment and not the least on the skill of the operator. These demands represent disadvantages each of which is difficult to solve separately, and imply furthermore an expensive manufacture of the package blanks.

US 5,121,997 discloses a method for incorporating a separate film or membrane having means for tearing and interlocking zipper elements into a bag-like structure to form an easy-open reclosable flexible container.

WO 2004/037665 discloses a closure device for a reclosable pouch. A zipper tape includes male and female closure elements disposed on and separate from first and second pouch walls, respectively. The female closure element includes a female profile member and first and second flanges disposed on either side of and spaced apart from the female profile member.

EP 0 569 301 discloses a plastic bag with recloseable zipper-type closure formed with grip strips on its lips to ease the opening of the bags. The grip strips are extruded from a grip strip extruder which is moved relative to a movement of the zipper type profile to produce a regularly repeating pattern.

EP 0 023 817 discloses a bag forming material being provided by feeding a length of substrate sheet material in a substantially flat condition and simultaneously feeding respective lengths of cooperable male and female reclosable elements onto the sheet material adjacent the longitudinal edges thereof, and applying an adhesive to one or both of the contact surfaces of a respective length of reclosable element and the length of sheet material before the mutual contact thereof.

### The Object of the Invention

The object of the present invention is to provide an improved method and an improved device for producing continuous edge thickenings of package blanks along the running direction thereof.

The object is furthermore to provide a method and a device to obtain edge thickenings having easily adaptable properties. In doing so, the invention can provide on one hand solid and on the other hand stiffer edge thickenings, which means that the package blanks slide with lower friction in the support arms and also that the edge thickenings do not jam in the channel gaps of the support arms.

### Summary of the Invention

By the present invention, as the same is set forth in the independent claims the above-mentioned objects are met, wherein the mentioned disadvantages have been eliminated. Suitable embodiments of the invention are defined in the dependent claims.

The invention is based on edge thickenings on the package blanks being applied by jet moulding, so-called extrusion, by granulate being heated and fed through an extruder nozzle for the formation of a homogeneous, essentially cylindrical bead on both side edges of a plane sheet. By such an extruder method, it is possible to easily set the diameter of the edge thickenings depending on which product weight that is to be packed. It is also possible to easily mix in different materials into the edge thickenings depending on the desired properties of the edge thickening, e.g. small friction, hardness, strength etc., without affecting the other material in the sheet subsequently forming the bags.

By this extruder method, it is also possible to use recycled material. The method also increases the quality and decreases the rejections of the package blanks.

More specifically, the invention concerns a method for manufacturing a continuous bag-like package blank that is produced by a plane plastic sheet being unwound from a storage reel of the sheet, the sheet being conveyed through an edge thickening equipment and further to a folding device, to a welding device and to a slotting tool in order to obtain a continuous bag-like package blank, which, e.g., may be introduced into channels intended therefore in support arms in a packing machine. The edge thickening equipment comprises a process bed over which the sheet is conveyed. It furthermore comprises an extruder device having a first extruder nozzle placed on the opposite side of the sheet in relation to the process bed and aligned to continuously extrude a material bead that is permanently attached to a first edge area of the sheet. The extruder device also comprises a second extruder nozzle placed on the opposite side of the sheet in relation to the process bed and aligned to continuously extrude a material bead that is permanently attached to an edge area of the sheet opposite the first edge area.

One embodiment of the method involves that the extruder nozzles individually can be controllably displaced in relation to each other, on one hand for an adaptation to different widths of the sheet, and on the other hand for an exact alignment in relation to the respective edges of the sheet, as well as for an alignment of the location of the two nozzles in relation to the storage reel and thereby the sheet in the edge thickening equipment. The advantage of such controllable extruder nozzles is that the position of the extruded material beads can be accurately controlled in relation to the edges of the sheet, which gives an optimum attachment of the bead to the sheet by the fact that the sheet part enclosing the bead can be determined.

One embodiment of the method involves that the angle of at least one extruder nozzle, and also of both, in relation to the process bed can be regulated. This provides additional advantages of how the material bead is applied to the edge area of the sheet. For instance, a changed feed rate of the sheet may require an adjustment of said angle.

One embodiment of the method involves that the distance of at least one extruder nozzle to the process bed can be regulated. Also this provides additional advantages in view of the possibility of controlling how the material bead is applied to the edge area of the sheet.

One embodiment of the method involves that the opening diameter of at least one extruder nozzle can be set. Also this provides additional advantages in view of the desired size of the material bead. The setting can be formed by an automatic regulation of the opening of the nozzle of the type variable aperture or by a manual replacement of the opening of the nozzle, which requires a shutdown.

One embodiment of the method involves that auxiliary material for the material bead is conveyed into the extruder device, either together with the ordinary granulate, in the screw part of the extruder or in the nozzle part, to be mixed and extruded with the material bead.

One embodiment of the method involves that pressure and temperature are adapted in the extruder nozzles so that the abutment of the material bead against the edge area of the sheet provides a capillarity, thermal stress or adhesive force that attaches the edge of the sheet to the material bead and there forms a permanent joint between the sheet and the bead. In doing so, by the heat from the thickening, the extrusion compound, the sheet and the thickening are welded together into a strong joint.

The invention also concerns a device for manufacturing a continuous bag-like package blank. This device comprises an edge thickening equipment, which is mounted on a stand that is provided with an extruder. This is arranged to feed extrusion compound through two paired extruder nozzles placed on an essentially horizontal feed beam in the stand. Each one of the extruder nozzles is directed to a process bed in the stand for extrusion against a sheet running between the process bed and each extruder nozzle, which sheet preferably is manufactured from a thermoplastic, e.g. polyethylene, polypropylene, polystyrene or polyvinyl chloride. The sheet is arranged to pass a folding device placed adjacent to the edge thickening equipment. The sheet is furthermore arranged to be fed to a welding device and to a slotting tool for forming a continuous bag-like package blank, which, e.g., may be introduced into channels intended therefore in support arms in a packing machine or be reeled for storage and later use. The continuous bag-like package blank may also be folded to and fro in a box or be reeled into a transport reel for storage.

One embodiment of the device involves that the process bed is provided with at least one cooling element placed right opposite each extruder nozzle so that a cooling of the extrusion compound can be effected almost directly after, or at least speed up, the extrusion for the formation of the material bead that attaches to the edge portions of the sheet and forms the edge thickening. This plays a part in providing a controlled material thickening of the sheet, which is important for the final product, i.e., the bag-like package blanks, to run without problems in the support arms of a packing machine.

One embodiment of the device involves that each cooling element is provided with a plane surface, which surfaces are orientated in the same plane against which surfaces the sheet can slide. This embodiment means that the cooling elements themselves make up the plane on which the sheet slides during the extrusion process, which implies that the process can be controlled better. Cooling medium, e.g. in the form of cooling water, cooling air or another cooling medium, is used in the cooling elements to provide a rapid cooling after extrusion. This is important to achieve a good final result of the material bead.

One embodiment of the device involves that the process bed is provided with a support placed between said cooling elements. This embodiment means that the process bed can be stiffened, which contributes to an optimum final result of the material bead and thereby the edge thickening.

One embodiment of the device involves that the support is provided with a plane surface having an antistatic border, which is orientated in said plane. This is an additional design of the process bed that improves the supporting surface of the sheet during the process and that contributes to keeping the sheet and its edge portions plane during the extrusion until the extrusion compound reaches the sheet.

One embodiment of the device involves that the feed beam is provided with a lateral adjustment device, which is arranged to laterally displace the two extruder nozzles simultaneously and equally much along the feed beam. This lateral adjustment makes it easier to obtain the correct position of the extruder nozzles in relation to the sheet and its edge portions.

One embodiment of the device involves that the lateral adjustment device is provided with spacer members arranged to adjust the distance between the two extruder nozzles. These spacer members contribute to being able to adapt the edge thickening equipment to different widths of sheets and thereby to different sizes of the subsequently manufactured packages.

One embodiment of the device involves that the process bed is provided with at least one slit plate placed in the longitudinal direction of the process bed and remotely from the extruder nozzle, which slit plate forms a slit directed to the process bed that corresponds to the maximal edge thickening formed by the extrusion compound. This slit plate limits the thickness of the edge thickening so that the same can be introduced into channels in the support arms, which channels have a limited width. The slit plates may also be formed to mould the edge thickenings to correspond to an optimum cross-section for said channels. Such a moulding is made while the extrusion compound is still mouldable and has not yet solidified.

The device is formed to handle all weldable plastic films and laminates and also foils of plastic-coated aluminium and sheets of plastic-coated paper etc.

### Brief Description of the Drawings

Now, the invention will be described in more detail, reference being made in connection with the accompanying drawing figures. The drawing figures show only explanatory sketches intended to facilitate the understanding of the invention.
- Figure 1: shows a perspective view of a device according to the invention.
- Figure 2: shows a planar view from above of the device according to Figure 1.
- Figure 3: shows a section A-A through the equipment according to Figure 2.
- Figure 4: shows a section B-B through an extruder nozzle according to Figure 2.
- Figure 5: shows a section C-C through the sheet against the extruder nozzles according to Figure 2.
- Figure 6: shows a partial enlargement from Figure 5.

### Description of the Invention

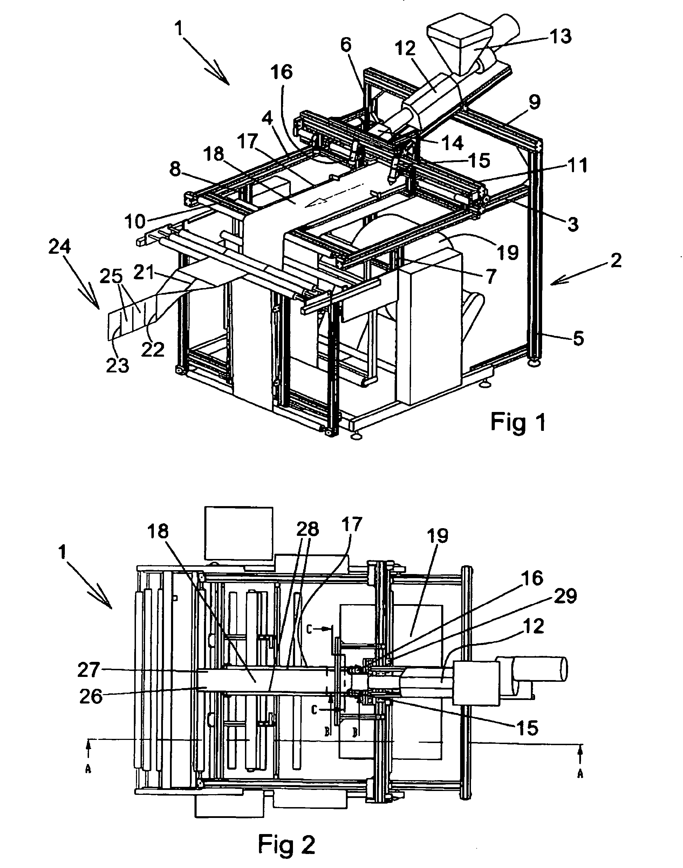

Figure 1 shows an edge thickening equipment 1 according to the invention. The equipment comprises a stand 2, which is provided with at least two longitudinal horizontal beams 3, 4 and vertically directed supporting beams 5, 6, 7, 8. Between the longitudinal beams, at least one rear cross beam 9 and a front cross beam 10 as well as a feed beam 11 are mounted. An extruder 12 provided with a container 13 for granulate and an internally placed feed screw, not shown, to advance granulate to a heater 14 that melts the granulate, which in a melted state is fed further to a first extruder nozzle 15 and a second extruder nozzle 16. The extruder 12 is carried by the rear cross beam 9 of the stand and the extruder nozzles 15, 16 are laterally movably mounted on the feed beam 11. Between the feed beam 11 and the front cross beam 10, a process bed 17 is placed, on which bed, sheet 18, preferably of thermoplastic, is fed in the direction of the arrow. The sheet is unwound from a storage reel 19 and runs between a number of guide and tension rollers forward through the feed beam 11 and over the process bed under the extruder nozzles 15, 16. The melt granulate is fed out through the nozzles as a material bead, which is attached to the sheet by a melting procedure. Even if a melting procedure is the most suitable way to apply the material bead to the sheet, also other types of adhesion may be used, e.g. an agglutination procedure. By the design of the extruder nozzles, also other cross-sectional shapes of the material bead than circular shapes can be extruded, e.g., shapes having an elliptical cross-section or shapes having essentially a rectangular cross-section. The figure also shows schematically the sheet 18 when this leaves the edge thickening equipment 1 and passes a folding device (not shown), which folds the sheet along the centre line 21 thereof, which will form the bottom of the bag. The sheet is then transported further through a welding device (not shown), which forms transverse welds 22 and further to a slotting tool (not shown), which slots the welded sheet web so that slots 23 create a continuous bag-like package blank 24. The package blank comprises continuous but individual bags 25, which package blank thereupon is ready to be introduced into support arms in a packing machine where the bags are filled, sealed and separated into individual packages.

Figure 2 shows the edge thickening equipment 1 according to Figure 1 from above modified for a narrower sheet 18 as well as also shown with a wide sheet roll to indicate the possibility of varying the equipment for different sheet widths. The figure shows the extruder 12 and the extruder nozzle 15, 16 thereof, which are aligned for extruding a material bead 28 onto a first edge area 26 and a second edge area 27 of the plane sheet 18. The sheet runs in the direction of the arrow over the process bed 17 from the storage reel 19. The two extruder nozzles 15, 16 are mounted on each a carriage 29, which can be moved laterally along the feed beam. Also the distance between the extruder nozzles can then be adjusted by the carriages being controlled individually by servomotors to be possible to be held aligned along the edge lines. An alternative is also that both nozzles are placed on a common carriage the width of which is possible to change to a greater or smaller one depending on the sheet width.

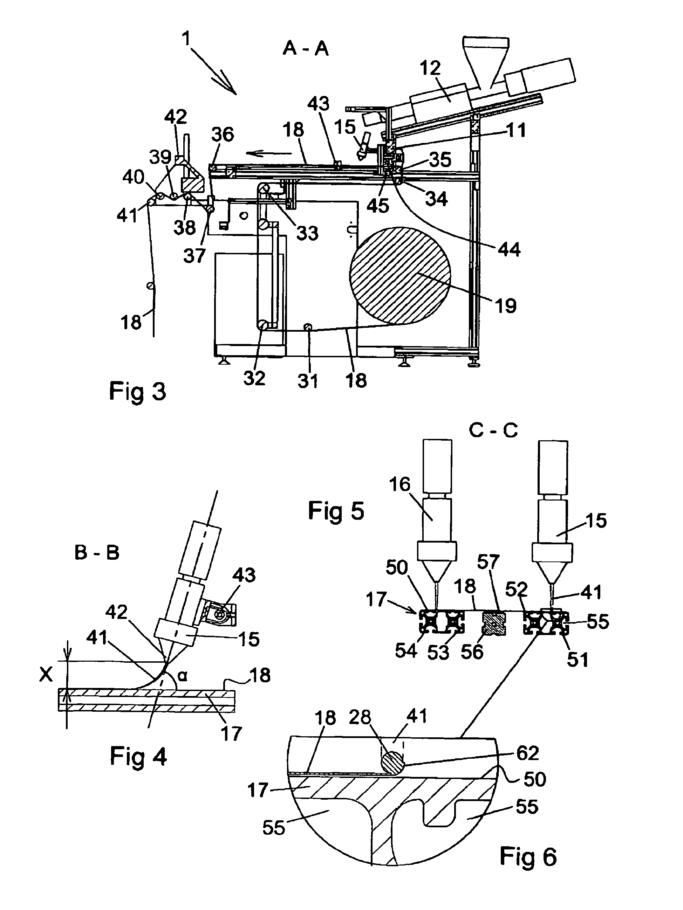

Figure 3 shows a section A-A according to Figure 2 with the edge thickening equipment 1 and the extruder 12, which is arranged to feed extrusion compound through the extruder nozzle 15 and down onto the sheet 18. The sheet 18 is unwound from the storage reel 19 and runs via deflection rollers 31, 32, 33, 34, 35, 36, 37 through the equipment 1 and further via the deflection rollers 38, 39, 40, 41 through a hot-stamping equipment 42. The sheet 18 is fed further to a folding device, a welding device and a slotting tool in order to subsequently form a continuous bag-like package blank ready to be used in a packing machine intended therefore. The figure also shows a slit plate 43, which is placed on the process bed in the running direction of the sheet 18, which corresponds to the longitudinal direction of the process bed at a suitable distance from the extruder nozzle 15. The distance is selected in view of pressure and temperature of the extrusion compound pressed through the extruder nozzle in order to be able to mould the same before the compound has solidified. The moulding is carried out for the thickness of the material bead to not become too great and for no lumps to be formed along the bead. The material beads are preferably limited to a thickness of 2 mm at a preferred sheet thickness in an interval of 25-250 µm. In addition, the moulding can be made so as to fit channels in support arms in a packing machine wherein the package blanks then should run. The figure also shows the feed beam 11, which is provided with a lateral adjustment device 44 and a spacer member 45. The lateral adjustment device 44 is formed as a feed screw, which laterally moves the carriages on which the two extruder nozzles are mounted. The spacer member has only the function of allowing an adjustment of the distance between the two extruder nozzles, which can be provided either by simultaneous displacement of the carriages in relation to each other or by one of the carriages being displaced while the other one is laterally fixed. The equipment may also be provided with alignment sensors, which are arranged to guide the extruder nozzles along the sheet edges.

Figure 4 shows one of the extruder nozzles 15, which extrudes extrusion compound 41 onto an edge portion of a sheet 18, which is transported toward the left in the figure sliding on the process bed 17. The tip 42 of the nozzle is situated at a distance X from the process bed 17, wherein 5 mm < X < 100 mm, preferably 10 mm < X < 60 mm. This distance can also be regulated by distance tools, (not shown). Furthermore, the nozzle 15 is orientated at an angle α in the transverse direction to the process bed, wherein 10° < α < 90°, preferably 50° < α < 90°. In one embodiment, the angle α = 60°. Also this angle may be regulated by regulating elements (not shown) by a rotation of the nozzle around an adjusting shaft 43.

Figure 5 shows the two extruder nozzles 15, 16, which are orientated perpendicular to the upper surface 50 of the process bed 17 as seen in the longitudinal direction. The process bed 17 comprises cooling elements 51, 52, 53, 54, which in the embodiment illustrated are four and wherein the cooling elements are placed in pairs so that two cooling elements 51, 52 are situated under the first extruder nozzle 15, and two cooling elements are situated under the second extruder nozzle 16. Also these cooling elements may be displaced correspondingly to the extruder nozzles 15, 16 in order to always be placed under the edge portions of the sheet 18 where the hot extrusion compound 41 is attached to the edge portion of the sheet 18. The cooling elements are preferably formed as longitudinal aluminium profiles, which are provided with cavities 55 through which cooling medium in the form of cooling water, cooling air or another cooling medium can be transported. As is seen in the figure, these cooling elements may also be united in pairs into a single profile. The process bed 17 is furthermore provided with a bed support 56 on which a plane sliding surface provided with an antistatic border 57 is applied to facilitate the motion of the sheet over the bed.

Figure 6 shows the material bead 28, which is formed of the extrusion compound 41 and which is attached to the sheet 18. When the extrusion compound 41 reaches the sheet edge 62, a sheet enclosure is formed around the extrusion compound 41 of 90° and a welding together of the compound and the sheet is effected. Thus, by this enclosure, a homogeneous joint is formed between the material bead 28 and the sheet 18. In order to provide this joint, on one hand the temperature and the speed of the extruded compound can be controlled, but also a rapid cooling is important, and therefore said cooling elements with the air ducts 55 thereof are arranged near the upper plane surface 50 of the process bed 17.

## Claims

1. Method for manufacturing a continuous bag-like package blank (24), which is produced by a plane plastic sheet (18) being unwound from a storage reel (19) of the sheet (18), the sheet being conveyed through an edge thickening equipment (1) and further to a folding device, to a welding device and to a slotting tool to obtain a continuous bag-like package blank (24) having solid and stiff edge thickenings such that the package blanks can slide with low friction in support arms and the edge thickenings do not jam in the channel gaps in the support arms when the package blank is introduced into channels intended therefor in support arms in a packing machine, **characterized in that** the edge thickening equipment (1) comprises a process bed (17), over which the edge area (26, 27) of the sheet (18) is conveyed, and that an extruder device (12, 13) comprises a first extruder nozzle (15) placed on the opposite side of the sheet (18) in relation to the process bed (17), wherein said first extruder nozzle (15) is aligned and continuously extrudes a material bead (28) that is permanently attached to a first edge area (26) of the sheet, and that the extruder device (12, 13) comprises a second extruder nozzle (16) placed on the opposite side of the sheet (18) in relation to the process bed (17), wherein said second extruder nozzle (16) is aligned and continuously extrudes a material bead (28) that is permanently attached to a second edge area (27) of the sheet (18) opposite the first edge area (26), as well as that the extruder nozzles (15, 16) individually can be controllably displaced in relation to each other, on one hand for an adaptation to different widths of the sheet (18), and on the other hand for an exact alignment in relation to the respective edge areas (26, 27) of the sheet (18) as well as for an alignment of the location of the two nozzles (15, 16) in relation to the storage reel (19) and thereby the sheet (18) in the edge thickening equipment (1), and that pressure and temperature are adapted in the extruder nozzles (15, 16) so that the abutment of the material bead (28) against the edge areas (26, 27) of the sheet (18) provides a force that attaches the edge of the sheet (18) to the material bead (28) and there forms a permanent joint between the sheet (18) and the bead (28).

2. Method according to claim 1, **characterized in that** the angle of at least one extruder nozzle (15, 16) in relation to the process bed (17) can be regulated.

3. Method according to any one of claims 1-2, **characterized in that** the distance of at least one extruder nozzle (15, 16) to the process bed (17) can be regulated.

4. Method according to any one of claims 1-3, **characterized in that** the opening diameter of at least one extruder nozzle (15, 16) can be set.

5. Method according to any one of claims 1-4, **characterized in that** auxiliary material is conveyed into the extruder device (12, 13) to be mixed and extruded to the material bead (28).

6. Device for manufacturing a continuous bag-like package blank (24), which is produced by a plane plastic sheet (18) being unwound from a storage reel (19) of the sheet (18), said device comprising an edge thickening equipment (1), a folding device, a welding device, and a slotting tool, wherein the sheet is arranged to be conveyed through the edge thickening equipment (1), the folding device, the welding device and the slotting tool in order to obtain a continuous bag-like package blank (24) having solid and stiff edge thickenings such that the package blanks can slide with low friction in support arms and the edge thickenings do not jam in the channel gaps in the support arms when the package blank is introduced into channels intended therefor in support arms in a packing machine, **characterized in that** the edge thickening equipment (1) is mounted on a stand (2) that is provided with an extruder (12), which is arranged to feed extrusion compound (41) through a first and a second extruder nozzle (15, 16) placed on an essentially horizontal feed beam (11) in the stand (2), wherein each one of the extruder nozzles (15, 16) is directed to a process bed (17), formed with an upper plane surface (50), in the stand (2) for extrusion against the sheet (18) running between the process bed (17) and each extruder nozzle (15, 16), and wherein said first extruder nozzle (15) is aligned to continuously extrude a material bead (28) that is permanently attached to a first edge area (26) of the sheet, and that the extruder device (12, 13) comprises a second extruder nozzle (16) placed on the opposite side of the sheet (18) in relation to the process bed (17), wherein said second extruder nozzle (16) is aligned to continuously extrude a material bead (28) that is permanently attached to a second edge area (27) of the sheet (18) opposite the first edge area (26), as well as that the extruder nozzles (15, 16) individually can be controllably displaced in relation to each other, on one hand for an adaptation to different widths of the sheet (18), and on the other hand for an exact alignment in relation to the respective edge areas (26, 27) of the sheet (18) as well as for an alignment of the location of the two nozzles (15, 16) in relation to the storage reel (19) and thereby the sheet (18) in the edge thickening equipment (1), and that pressure and temperature are adapted in the extruder nozzles (15, 16) so that the abutment of the material bead (28) against the edge areas (26, 27) of the sheet (18) provides a force that attaches the edge of the sheet (18) to the material bead (28) and there forms a permanent joint between the sheet (18) and the bead (28).

7. Device according to claim 6, **characterized in that** the process bed (17) is provided with at least one cooling element (51, 52, 53, 54) placed right opposite each extruder nozzle so that a cooling of the extrusion compound (41) can take place almost directly after the extrusion.

8. Device according to claim 7, **characterized in that** the cooling elements (51, 52, 53, 54) are provided with cavities (55) through which cooling medium in the form of cooling water, cooling air or another cooling medium can be transported.

9. Device according to claim 8, **characterized in that** each cooling element (51, 52, 53, 54) is provided with a plane surface (50), which surfaces are orientated in the same plane and against which surfaces the sheet (18) can slide.

10. Device according to any one of claims 7-9, **characterized in that** the process bed (17) is provided with a bed support (56) placed between said cooling elements (51, 52, 53, 54).

11. Device according to claim 10, **characterized in that** the bed support (56) is provided with a plane sliding surface comprising an antistatic border (57), which is orientated in said plane.

12. Device according to any one of claims 6-11, **characterized in that** the feed beam (11) is provided with a lateral adjustment device (44), which is arranged to laterally displace the two extruder nozzles (15, 16) simultaneously and equally much along the feed beam (11).

13. Device according to claim 12, **characterized in that** the lateral adjustment device (44) is provided with spacer members (45) arranged to adjust the distance between the two extruder nozzles (15, 16).

14. Device according to any one of claims 7-13, **characterized in that** the process bed (17) is provided with at least one slit plate (43) placed in the longitudinal direction of the process bed (17) and remotely from the extruder nozzle (15), which slit plate (43) forms a slit directed to the process bed (17) that corresponds to the maximal thickness of the material bead (28) formed by the extrusion compound (41).

## Patentansprüche

1. Verfahren zur Herstellung eines endlosen beutelähnlichen Verpackungsrohlings (24), der aus einer ebenen Kunststoffbahn (18) erzeugt wird, die von einer Vorratsspule (19) der Bahn (18) abgewickelt wird, wobei die Bahn durch eine Kantenverdickungsausrüstung (1) und weiter zu einer Falzvorrichtung, zu einer Schweißvorrichtung und zu einem Schlitzwerkzeug befördert wird, um einen endlosen beutelähnlichen Verpackungsrohling (24) zu erzielen, der feste und steife Kantenverdickungen derart aufweist, dass die Verpackungsrohlinge mit geringer Reibung in Haltearmen gleiten können und die Kantenverdickungen die Kanalspalte in den Haltearmen nicht blockieren, wenn der Verpackungsrohling in Kanäle eingeführt wird, die dafür in Haltearmen in einer Verpackungsmaschine vorgesehen sind, **dadurch gekennzeichnet, dass** die Kantenverdickungsvorrichtung (1) ein Verarbeitungsbett (17) umfasst, über das der Kantenbereich (26, 27) der Bahn (18) befördert wird, und dadurch, dass eine Extrusionsvorrichtung (12, 13) eine erste Extrusionsdüse (15) umfasst, die im Verhältnis zum Verarbeitungsbett (17) an der gegenüberliegenden Seite der Bahn (18) angeordnet ist, wobei die erste Extrusionsdüse (15) ausgerichtet ist und kontinuierlich eine Materialraupe (28) extrudiert, die dauerhaft an einem ersten Kantenbereich (26) der Bahn angebracht wird, und dadurch, dass die Extrusionsvorrichtung (12, 13) eine zweite Extrusionsdüse (16) umfasst, die im Verhältnis zum Verarbeitungsbett (17) an der gegenüberliegenden Seite der Bahn (18) angeordnet ist, wobei die zweite Extrusionsdüse (16) ausgerichtet ist und kontinuierlich eine Materialraupe (28) extrudiert, die dauerhaft an einem zweiten Kantenbereich (27) der Bahn (18) gegenüber dem ersten Kantenbereich (26) angebracht wird, sowie dadurch, dass die Extrusionsdüsen (15, 16) im Verhältnis zueinander einzeln und steuerbar verlagert werden können, einerseits zur Anpassung an verschiedene Breiten der Bahn (18) und andererseits für eine genaue Ausrichtung im Verhältnis zu den entsprechenden Kantenbereichen (26, 27) der Bahn (18) sowie für eine Ausrichtung der Position der zwei Düsen (15, 16) im Verhältnis zur Vorratsspule (19) und damit der Bahn (18) in der Kantenverdickungsausrüstung (1), und dadurch, dass Druck und Temperatur in den Extrusionsdüsen (15, 16) derart angepasst werden, dass das Auftreffen der Materialraupe (28) auf die Kantenbereiche (26, 27) der Bahn (18) eine Kraft bereitstellt, welche die Kanten der Bahn (18) an der Materialraupe (28) anbringt und dort eine dauerhafte Verbindung zwischen der Bahn (18) und der Raupe (28) bildet.

2. Verfahren nach Anspruch 1, **dadurch gekennzeichnet, dass** ein Winkel mindestens einer Extrusionsdüse (15, 16) im Verhältnis zum Verarbeitungsbett (17) reguliert werden kann.

3. Verfahren nach einem der Ansprüche 1 bis 2, **dadurch gekennzeichnet, dass** der Abstand mindestens einer Extrusionsdüse (15, 16) zum Verarbeitungsbett (17) reguliert werden kann.

4. Verfahren nach einem der Ansprüche 1 bis 3, **dadurch gekennzeichnet, dass** der Öffnungsdurchmesser mindestens einer Extrusionsdüse (15, 16) eingestellt werden kann.

5. Verfahren nach einem der Ansprüche 1 bis 4, **dadurch gekennzeichnet, dass** in die Extrusionsvorrichtung (12, 13) Hilfsmaterial befördert wird, um in die Materialraupe (28) eingemischt und in dieser extrudiert zu werden.

6. Vorrichtung zur Herstellung eines endlosen beutelähnlichen Verpackungsrohlings (24), der aus einer ebenen Kunststoffbahn (18) erzeugt wird, die von einer Vorratsspule (19) der Bahn (18) abgewickelt wird, wobei die Vorrichtung eine Kantenverdickungsausrüstung (1), eine Falzvorrichtung, eine Schweißvorrichtung und ein Schlitzwerkzeug umfasst, wobei die Bahn dafür angeordnet ist, durch die Kantenverdickungsausrüstung (1), die Falzvorrichtung, die Schweißvorrichtung und die Schlitzvorrichtung befördert zu werden, um einen endlosen beutelähnlichen Verpackungsrohling (24) zu erzielen, der feste und steife Kantenverdickungen derart aufweist, dass die Verpackungsrohlinge mit geringer Reibung in Haltearmen gleiten können und die Kantenverdickungen die Kanalspalte in den Haltearmen nicht blockieren, wenn der Verpackungsrohling in Kanäle eingeführt wird, die dafür in Haltearmen in einer Verpackungsmaschine vorgesehen sind, **dadurch gekennzeichnet, dass** die Kantenverdickungsvorrichtung (1) an ein Gestell (2) montiert ist, das mit einem Extruder (12) ausgestattet ist, der dafür angeordnet ist, eine Extrusionsverbindung (41) durch eine erste und eine zweite Extrusionsdüse (15, 16) zu führen, die an einer im Wesentlichen horizontalen Zufuhrbrücke (11) im Gestell (2) angeordnet sind, wobei jede der Extrusionsdüsen (15, 16) auf ein mit einer oberen ebenen Oberfläche (50) gebildetes Verarbeitungsbett (17) im Gestell (2) gerichtet ist, um gegen die Bahn (18) zu extrudieren, die zwischen dem Verarbeitungsbett (17) und jeder Extrusionsdüse (15, 16) hindurchläuft, und wobei die erste Extrusionsdüse (15) dafür ausgerichtet ist, kontinuierlich eine Materialraupe (28) zu extrudieren, die dauerhaft an einem ersten Kantenbereich (26) der Bahn angebracht wird, und dadurch, dass die Extrusionsvorrichtung (12, 13) eine zweite Extrusionsdüse (16) umfasst, die im Verhältnis zum Verarbeitungsbett (17) an der gegenüberliegenden Seite der Bahn (18) angeordnet ist, wobei die zweite Extrusionsdüse (16) dafür ausgerichtet ist, eine Materialraupe (28) zu extrudieren, die dauerhaft an einem zweiten Kantenbereich (27) der Bahn (18) gegenüber dem ersten Kantenbereich (26) angebracht wird, sowie dadurch, dass die Extrusionsdüsen (15, 16) im Verhältnis zueinander einzeln und steuerbar verlagert werden können, einerseits zur Anpassung an verschiedene Breiten der Bahn (18) und andererseits für eine genaue Ausrichtung im Verhältnis zu den entsprechenden Kantenbereichen (26, 27) der Bahn (18) sowie für eine Ausrichtung der Position der zwei Düsen (15, 16) im Verhältnis zur Vorratsspule (19) und damit der Bahn (18) in der Kantenverdickungsausrüstung (1), und dadurch, dass Druck und Temperatur in den Extrusionsdüsen (15, 16) derart angepasst werden, dass das Auftreffen der Materialraupe (28) auf die Kantenbereiche (26, 27) der Bahn (18) eine Kraft bereitstellt, welche die Kante der Bahn (18) an der Materialraupe (28) anbringt und dort eine dauerhafte Verbindung zwischen der Bahn (18) und der Raupe (28) bildet.

7. Vorrichtung nach Anspruch 6, **dadurch gekennzeichnet, dass** das Verarbeitungsbett (17) mit mindestens einem Kühlelement (51, 52, 53, 54) ausgestattet ist, das direkt gegenüber jeder Extrusionsdüse angeordnet ist, so dass ein Kühlen der Extrusionsverbindung (41) fast direkt nach der Extrusion stattfinden kann.

8. Vorrichtung nach Anspruch 7, **dadurch gekennzeichnet, dass** die Kühlelemente (51, 52, 53, 54) mit Hohlräumen (55) ausgestattet sind, durch die ein Kühlmedium in Form von Kühlwasser, Kühlluft oder einem anderen Kühlmedium transportiert werden kann.

9. Vorrichtung nach Anspruch 8, **dadurch gekennzeichnet, dass** jedes Kühlelement (51, 52, 53, 54) mit einer ebenen Oberfläche (50) ausgestattet sind, wobei die Oberflächen in der gleichen Ebene ausgerichtet sind und die Bahn (18) an ihnen gleiten kann.

10. Vorrichtung nach einem der Ansprüche 7 bis 9, **dadurch gekennzeichnet, dass** das Verarbeitungsbett (17) mit einer Betthalterung (56) ausgestattet ist, die zwischen den Kühlelementen (51, 52, 53, 54) angeordnet ist.

11. Vorrichtung nach Anspruch 10, **dadurch gekennzeichnet, dass** die Betthalterung (56) mit einer ebenen Gleitfläche ausgestattet ist, die eine antistatische Begrenzung (57) umfasst, die in dieser Ebene ausgerichtet ist.

12. Vorrichtung nach einem der Ansprüche 6 bis 11, **dadurch gekennzeichnet, dass** die Zufuhrbrücke (11) mit einer seitlichen Einstellvorrichtung (44) ausgestattet ist, die dafür angeordnet ist, die zwei Extrusionsdüsen (15, 16) gleichzeitig und in gleichem Umfang entlang der Zufuhrbrücke (11) zu verlagern.

13. Vorrichtung nach Anspruch 12, **dadurch gekennzeichnet, dass** die seitliche Einstellvorrichtung (44) mit Abstandshalterelementen (45) ausgestattet ist, die dafür angeordnet sind, den Abstand zwischen den zwei Extrusionsdüsen (15, 16) zu justieren.

14. Vorrichtung nach einem der Ansprüche 7 bis 13, **dadurch gekennzeichnet, dass** das Verarbeitungsbett (17) mit mindestens einer Schlitzplatte (43) ausgestattet ist, die in Längsrichtung des Verarbeitungsbettes (17) und fern der Extrusionsdüse (15) angeordnet ist, wobei die Schlitzplatte (43) einen Schlitz bildet, der zum Verarbeitungsbett (17) ausgerichtet ist und der der maximalen Dicke der Materialraupe (28) entspricht, die durch die Extrusionsverbindung (41) gebildet ist.

## Revendications

1. Procédé de fabrication d'une ébauche continue d'emballage de type sac (24) qui est constituée d'une feuille de plastique plane (18) qui est déroulée d'un rouleau de réserve (19) de feuille (18), la feuille étant convoyée dans un équipement d'épaississement des bords (1) et plus loin vers un dispositif de pliage, un dispositif de soudage et un outil de débitage pour obtenir une ébauche continue d'emballage de type sac (24) dotée d'épaississements de bords solides et rigides de manière à ce que les ébauches d'emballage puissent glisser avec une faible friction dans des bras supports et à ce que les épaississements de bords ne se bloquent pas dans les creux des canaux des bras supports lorsque l'ébauche d'emballage est introduite dans des canaux destinés à cet effet pratiqués dans des bras supports dans une machine à emballer, **caractérisé en ce que** l'équipement d'épaississement des bords (1) comprend un banc de traitement (17) sur lequel la zone des bords (26, 27) de la feuille (18) est convoyée et qu'un dispositif d'extrusion (12, 13) comprend une première buse d'extrusion (15) placée sur la face opposée de la feuille (18) relativement au banc de traitement (17), ladite première buse d'extrusion (15) étant alignée pour extruder en continu un bourrelet de matériau (28) qui est attaché en permanence à une première zone de bord (26) de la feuille, et que le dispositif d'extrusion (12, 13) comprend une seconde buse d'extrusion (16) placée sur la face opposée de la feuille (18) relativement au banc de traitement (17), ladite seconde buse d'extrusion (16) étant alignée pour extruder en continu un bourrelet de matériau (28) qui est attaché en permanence à une seconde zone de bord (27) de la feuille (18) opposée à la première zone de bord (26), de même que les buses d'extrusion (15, 16) peuvent être déplacées individuellement sous contrôle les unes par rapport aux autres d'une part pour s'adapter à différentes largeurs de la feuille (18) et d'autre part pour s'aligner précisément par rapport aux zones de bords respectives (26, 27) de la feuille (18) de même que pour aligner la position des deux buses (15, 16) par rapport au rouleau de réserve (19) et ainsi la feuille (18) dans la zone d'épaississement de bords (1), et que la pression et la température sont adaptées dans les buses d'extrusion (15, 16) afin que la butée du bourrelet de matériau (28) contre les zones de bords (26, 27) de la feuille (18) exerce une force qui attache le bord de la feuille (18) au bourrelet de matériau (28) et y forme un joint permanent entre la feuille (18) et le bourrelet (28).

2. Procédé selon la revendication 1, **caractérisé en ce que** l'angle décrit par au moins une buse d'extrusion (15, 16) par rapport au banc de traitement (17) peut être réglé.

3. Procédé selon l'une quelconque des revendications 1 et 2, **caractérisé en ce que** la distance entre l'au moins une buse d'extrusion (15, 16) et le banc de traitement (17) peut être réglée.

4. Procédé selon l'une quelconque des revendications 1 à 3, **caractérisé en ce que** le diamètre d'ouverture de l'au moins une buse d'extrusion (15, 16) peut être défini.

5. Procédé selon l'une quelconque des revendications 1 à 4, **caractérisé en ce que** du matériau auxiliaire est convoyé dans le dispositif d'extrusion (12, 13) pour être mélangé et extrudé en bourrelet de matériau (28).

6. Dispositif de fabrication d'une ébauche continue d'emballage de type sac (24) qui est constituée d'une feuille de plastique plane (18) qui est déroulée d'un rouleau de réserve (19) de feuille (18), ledit dispositif comprenant un équipement d'épaississement des bords (1), un dispositif de pliage, un dispositif de soudage et un outil de débitage, dans lequel la feuille est conçue pour être convoyée dans l'équipement d'épaississement de bords (1), le dispositif de pliage, le dispositif de soudage et l'outil pour obtenir une ébauche d'emballage continue de type sac (24) dotée d'épaississements de bords solides et rigides de manière à ce que les ébauches d'emballage puissent glisser avec une faible friction dans des bras supports et à ce que les épaississements de bords ne se bloquent pas dans les creux des canaux des bras supports lorsque l'ébauche d'emballage est introduite dans des canaux destinés à cet effet pratiqués dans des bras supports dans une machine à emballer, **caractérisé en ce que** l'équipement d'épaississement des bords (1) est monté sur un support (2) qui est pourvu d'une extrudeuse (12) qui est conçue pour apporter du composé d'extrusion (41) via une première et une seconde buses d'extrusion (15, 16) placées sur une barre d'alimentation sensiblement horizontale (11) dans le support (2), chacune des buses d'extrusion (15, 16) étant dirigée vers un banc de traitement (17) conformé avec une surface supérieure plane (50) dans le support (2) pour extrusion contre la feuille (18) circulant entre le banc de traitement (17) et chaque buse d'extrusion (15, 16) et ladite première buse d'extrusion (15) étant alignée pour extruder en continu un bourrelet de matériau (28) qui est attaché en permanence à une première zone de bord (26) de la feuille, et que le dispositif d'extrusion (12, 13) comprend une seconde buse d'extrusion (16) placée sur la face opposée de la feuille (18) relativement au banc de traitement (17), ladite seconde buse d'extrusion (16) étant alignée pour extruder en continu un bourrelet de matériau (28) qui est attaché en permanence à une seconde zone de bord (27) de la feuille (18) opposée à la première zone de bord (26), de même que les buses d'extrusion (15, 16) peuvent être déplacées individuellement sous contrôle les unes par rapport aux autres d'une part pour s'adapter à différentes largeurs de la feuille (18) et d'autre part pour s'aligner précisément par rapport aux zones de bords respectives (26, 27) de la feuille (18) de même que pour aligner la position des deux buses (15, 16) par rapport au rouleau de réserve (19) et ainsi la feuille (18) dans la zone d'épaississement de bords (1), et que la pression et la température sont adaptées dans les buses d'extrusion (15, 16) afin que la butée du bourrelet de matériau (28) contre les zones de bords (26, 27) de la feuille (18) exerce une force qui attache le bord de la feuille (18) au bourrelet de matériau (28) et y forme un joint permanent entre la feuille (18) et le bourrelet (28).

7. Dispositif selon la revendication 6, **caractérisé en ce que** le banc de traitement (17) est équipé d'au moins un élément refroidisseur (51, 52, 53, 54) placé tout à fait à l'opposé de chaque buse d'extrusion pour qu'un refroidissement du composé d'extrusion (41) puisse avoir lieu presque directement après l'extrusion.

8. Dispositif selon la revendication 7, **caractérisé en ce que** les éléments refroidisseurs (51, 52, 53, 54) sont pourvus de cavités (55) dans lesquelles du fluide refroidisseur sous forme d'eau de refroidissement, d'air de refroidissement ou d'autre fluide de refroidissement peut être transporté.

9. Dispositif selon la revendication 8, **caractérisé en ce que** chaque élément refroidisseur (51, 52, 53, 54) est pourvu d'une surface plane (50), laquelle surface est orientée dans le même plan et contre laquelle surface la feuille (18) peut glisser.

10. Dispositif selon l'une quelconque des revendications 7 à 9, **caractérisé en ce que** le banc de traitement (17) est pourvu d'un support de banc (56) placé entre lesdits éléments refroidisseurs (51, 52, 53, 54).

11. Dispositif selon la revendication 10, **caractérisé en ce que** le support de banc (56) est pourvu d'une surface de glissement plane comprenant une limite antistatique (57) qui est orientée dans ledit plan.

12. Dispositif selon l'une quelconque des revendications 6 à 11, **caractérisé en ce que** la barre d'alimentation (11) est pourvue d'un dispositif d'ajustement latéral (44) qui est conçu pour déplacer latéralement les deux buses d'extrusion (15, 16) simultanément et sur une distance égale le long de la barre d'alimentation (11).

13. Dispositif selon la revendication 12, **caractérisé en ce que** le dispositif d'ajustement latéral (44) est pourvu d'éléments espaceurs (45) conçus pour ajuster la distance entre les deux buses d'extrusion (15, 16).

14. Dispositif selon l'une quelconque des revendications 7 à 13, **caractérisé en ce que** le banc de traitement (17) est pourvu d'au moins une plaque fendue (43) placée dans le sens longitudinal du banc de traitement (17) et à distance de la buse d'extrusion (15), laquelle plaque fendue (43) forme une fente dirigée vers le banc de traitement (17) et équivaut à l'épaisseur maximale du bourrelet de matériau (28) constitué du composé d'extrusion (41).
